# EUROPÄISCHE PATENTSCHRIFT

(11) **EP 1 464 628 B1**
(45) Veröffentlichungstag und Bekanntmachung des Hinweises auf die Patenterteilung: **17.10.2012**
(21) Anmeldenummer: 04001292.4
(22) Anmeldetag: 22.01.2004
(51) Int. Cl.: C02F 11/12, F26B 3/22, F26B 3/28, F26B 9/10, F26B 17/02, F26B 25/04

(54) **Vorrichtung zum Trocknen von Klärschlamm**
Device to dry sewage sludge
Système de sechage de boues provenant de stations d'épuration des eaux uséés

(30) Priorität: 17.03.2003 DE 10311554
(43) Veröffentlichungstag der Anmeldung: 06.10.2004
(73) Patentinhaber: Passavant-Geiger GmbH, 65326 Aarbergen (DE)
(72) Erfinder: Zizmann, Richard, 72401 Haigerloch-Owingen (DE)
(74) Vertreter: Dahmen, Michael

(56) Entgegenhaltungen:
- EP-A1- 2 301 896
- DE-A- 4 315 321
- DE-A- 19 704 201
- US-A- 5 660 124

## Beschreibung

Die Erfindung betrifft eine Vorrichtung zum Trocknen von Klärschlamm mit den Merkmalen des Oberbegriffs des Anspruchs 1.

Aus der DE 43 15 321 A1 ist eine Vorrichtung zum Trocknen von Klärschlamm durch Sonnenstrahlung bekannt. Diese Vorrichtung weist eine rechteckige, längliche Bodenplatte auf, die eine Trockenfläche bildet, auf der der Klärschlamm zum Trocknen ausgebracht wird. Zum Wenden und Belüften des Klärschlamms ist ein Schubwender vorgesehen. Dieser weist eine quer zur Trockenfläche angeordnete und in Längsrichtung der Trockenfläche verfahrbare und drehbare Welle auf, von der Paddel oder dgl. zum Wenden des Klärschlamms abstehen. Zum Wenden des Klärschlamms wird die Welle über dem Klärschlamm verfahren und zugleich drehend angetrieben. Dabei tauchen die Paddel in den Klärschlamm ein und wenden, lockern und belüften diesen. Bei jedem Wenden wird der Klärschlamm ein Stück weit in Längsrichtung der Trockenfläche bewegt. Der zu trocknenden Klärschlamm wird an einem Ende der Trockenfläche eingebracht und mit dem Schubwender sooft gewendet, bis er das andere Ende der Trockenfläche erreicht, wo er beispielsweise in einen Sammelbehälter fällt.

Bei dieser Vorrichtung wird die hohe Umlaufzeit der unstetig arbeitenden Förderer als nachteilig empfunden. Diese bekannte Vorrichtung ist aufwendig, sie benötigt einen Antrieb zum Verfahren des Schubwenders und einen Drehantrieb für seine Welle. Außerdem ist das Ausbringen und Verteilen des Klärschlamms auf der Trockenfläche aufwendig, der Schubwender muss dazu mehrfach über die Trockenfläche verfahren werden. Auch das Einstellen einer Schichtdicke des Klärschlamms auf der Trockenfläche gestaltet sich aufwendig.

Aus der DE 197 04 201 A1 ist eine Vorrichtung zum Entwässern und Trocknen von Klärschlamm bekannt, bei welcher der Klärschlamm von einer Räumeinrichtung über eine Gitterschicht gefördert wird, wobei der Klärschlamm durch Zufuhr von Trocknungsluft durch die Gitterschicht getrocknet werden kann.

Aus der US 5,660,124 ist eine Vorrichtung zum Trocknen von Klärschlamm oder dergleichen bekannt, welche einen Klumpenbrecher (clod breaker 16) aufweist, der den Klärschlamm zerkleinert und auf einer Trocknungsfläche verteilt. An einem Förderband (conveyor 38) sind unterschiedliche Klärschlamm-Kratzwerkzeuge, wie runde Stäbe (round rods 48), Paddel (paddles 50) und Pflüge (plows 52) vorgesehen, die direkt über die Trockenfläche streichen, um den Klärschlamm zu fördern und ggf. zu wenden.

Der Erfindung liegt die Aufgabe zugrunde, eine vereinfachte Vorrichtung zum Trocknen von Klärschlamm durch Sonnenstrahlung vorzuschlagen.

Diese Aufgabe wird erfindungsgemäß durch die Merkmale des Anspruchs 1 gelöst. Die erfindungsgemäße Vorrichtung weist einen Kratzerförderer auf, dessen Kratzer sich mit Abstand über der Trockenfläche befinden. Dabei ist unter Kratzerförderer ein Stetigförderer mit einem oder mehreren endlos umlaufenden Zugmitteln zu verstehen, an dem mindestens ein Förderelement (Kratzer) angebracht ist, das bei Antrieb des Zugmittels ein zu förderndes Gut (Schüttgut) verschiebt. Im Unterschied zu üblichen Kratzerförderern schleift das Förderelement (Kratzer) nicht auf einem Untergrund, sondern weist Abstand von diesem auf. Der Untergrund ist die Trockenfläche. Die erfindungsgemäße Vorrichtung braucht nur einen Antrieb für den Kratzförderer. An einem Ende auf die Trockenfläche aufgebrachter Klärschlamm wird in einem Durchgang eines Kratzers über die Trockenfläche mit einer Schichtdicke auf der Trockenfläche ausgebracht, die dem vertikalen Abstand des Kratzers von der Trockenfläche entspricht. Es ist kein mehrfaches Wenden oder Überfahren des ausgebrachten Klärschlamms erforderlich um eine bestimmte Schichtdicke des Klärschlamms zu erreichen. Weiterer Vorteil ist der stationär angebrachte Antrieb des Kratzerförderers, der eine Energiezuführung im Vergleich mit einem beweglichen Antrieb vereinfacht. Die erfindungsgemäße Vorrichtung und deren Trockenfläche können ein Gefälle aufweisen. Dies ist ein erheblicher Vorteil bei einem Gefälle aufweisenden Gelände, da das Gelände nicht horizontal planiert werden muss.

Bei einer Länge der Trockenfläche von 100 m oder 200 m werden erhebliche Erdarbeiten eingespart.

In bevorzugter Ausgestaltung der Erfindung weist die Vorrichtung eine Höheneinstelleinrichtung auf, mit der eine Höhe des oder der Kratzer des Kratzerförderers über der Trockenfläche einstellbar ist. Beispielsweise können die Kratzer auf Schienen geführt sein, die höhenverstellbar sind. Diese Ausgestaltung der Erfindung ermöglicht eine optimale Einstellung der Schichtdicke des Klärschlamms.

Zum Entfernen getrockneten Klärschlamms von der Trockenfläche können die oder kann der Kratzer des Kratzerförderers auf eine Höhe von null über der Trockenfläche eingestellt werden, d.h. der Kratzer liegt auf der Trockenfläche auf. Auch kann der Kratzer so eingestellt werden, dass er mit kleinem Spalt und damit berührungslos über die Trockenfläche verfährt um den getrockneten Klärschlamm zu entfernen. Eine Ausgestaltung sieht einen Räumer, beispielsweise ein sich über eine Breite der Trockenfläche erstreckendes Räumschild vor, das zum Entfernen des getrockneten Klärschlamms von der Trockenfläche in eine Räumstellung bringbar ist. Der Räumer kann beispielsweise zwischen einer angehobenen Stellung und einer abgesenkten Räumstellung hin- und herbeweglich an einem Kratzer des Kratzerförderers angebracht sind. Der Räumer kann auch lösbar an einem Kratzer oder an dem oder den Zugmitteln des Kratzerförderers anbringbar ausgebildet sein.

Zum Wenden und Belüften des auf der Trockenfläche ausgebrachten Klärschlamms weisen der oder die Kratzer des Kratzerförderers Schlammwender auf. Die Schlammwender können beispielsweise als Paddel, Schaufeln oder nach Art von Pflugscharen ausgebildet sein. Die Schlammwender können längs und quer verteilt so angeordnet sein, dass sie die gesamte Breite der Trockenfläche überstreichen und den Klärschlamm auf der gesamten Breite der Trockenfläche wenden. Bei jedem Wenden bewegen die Schlammwender den Klärschlamm ein Stück weit auf der Trockenfläche vorwärts. U. U. lassen sie die Bedingungen, insbesondere die Häufigkeit des Wendens und die Schichtdicke des Klärschlamms, so wählen und einstellen, dass der Klärschlamm durch seine Vorwärtsbewegung beim Wenden so weit bewegt wird, dass er das Ende der Trockenfläche erreicht wenn er getrocknet ist. Ein Räumen der Trockenfläche von getrocknetem Klärschlamm erübrigt sich dadurch.

Als Zugmittel von Kratzerförderern werden vielfach Ketten eingesetzt. Auch sonstige Zugmittel wie beispielsweise Gurte kommen in Betracht. Eine Ausgestaltung der Erfindung sieht ein Seil bzw. Seile, insbesondere Stahlseile als Zugmittel vor. Gegenüber Ketten haben Stahlseile den Vorteil, dass sie nahezu wartungsfrei und zudem preisgünstig sind.

In bevorzugter Ausgestaltung der Erfindung weist der Kratzerförderer nur wenige Kratzer auf. Es genügt auch für eine Trockenfläche mit 100 m und mehr Länge ein bis zwei gleichzeitig auf der Trockenfläche befindliche Kratzer. Damit ergibt sich eine Gesamtzahl von höchstens etwa fünf bis sechs Kratzern, es sind die im Rücklauf befindlichen Kratzer mit zu berücksichtigen. Auch genügt ein Kratzerförderer mit insgesamt nur einem oder mit zwei Kratzern. Bei zwei Kratzern befindet sich ein Kratzer auf der Trockenfläche während der andere rückgeführt wird. Eine geringe Kratzerzahl hat den Vorteil eines niedrigen Energiebedarfs für den Antrieb. Zum Wenden und Fördern des Klärschlamms ist ein Kratzer ausreichend.

In bevorzugter Ausgestaltung der Erfindung ist die Vorrichtung in einem Gebäude untergebracht, wobei das Gebäude insbesondere nach Art eines Gewächshauses ausgebildet ist. Das Gebäude hat die Aufgabe, den zu trocknenden Klärschlamm vor Regen zu schützen, die Sonnenstrahlung zur Erwärmung des Gebäudeinnenraums bzw. des auf der Trockenfläche ausgebrachten Klärschlamms zu nutzen und durch Be- und Entlüftung Feuchtigkeit abzuführen.

Zur Beschleunigung der Trocknung sieht eine Ausgestaltung der Erfindung eine Heizeinrichtung in der Trockenfläche vor. Die Heizeinrichtung ist insbesondere nach Art einer Fußbodenheizung ausgeführt.

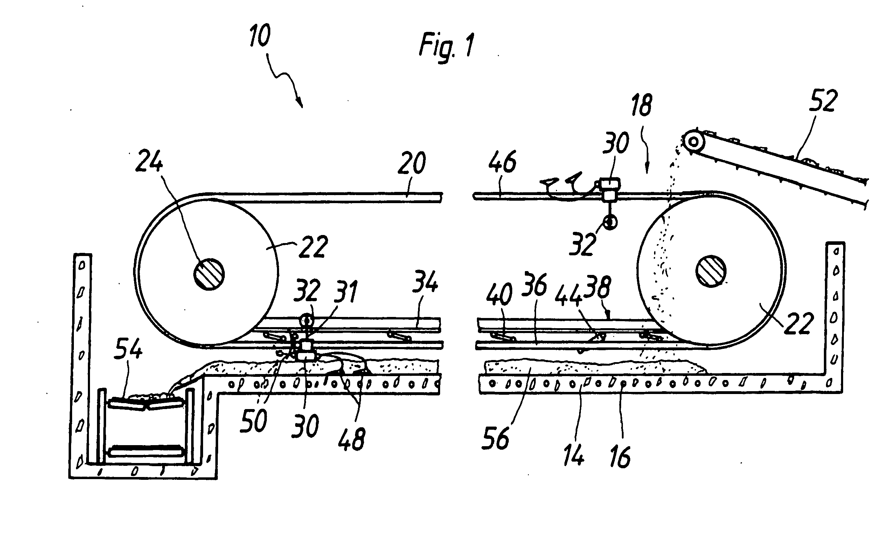

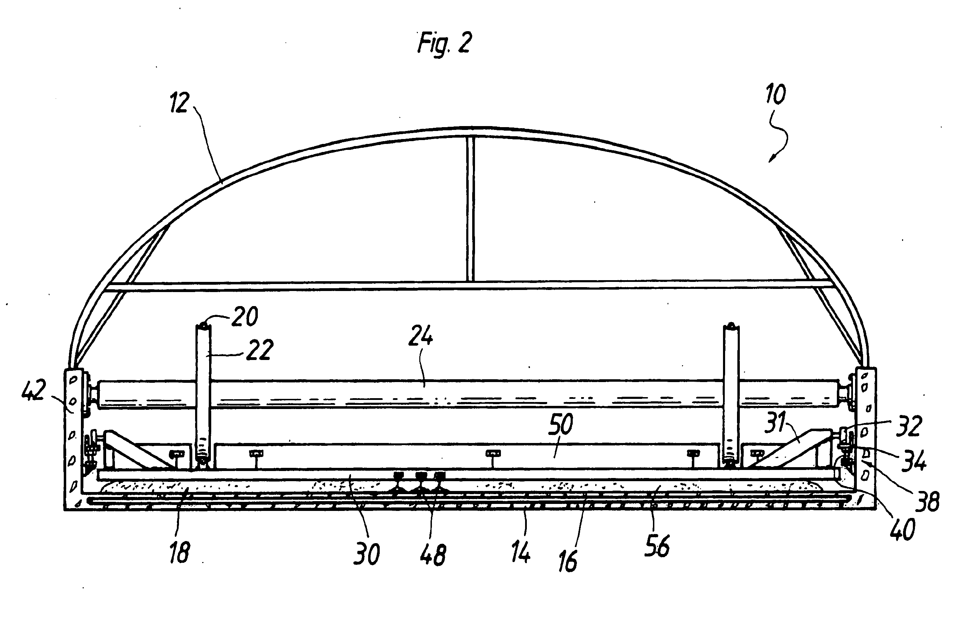

Die Erfindung wird nachfolgend anhand eines in der Zeichnung dargestellten Ausführungsbeispiels näher erläutert. Die beiden Figuren zeigen eine schematisierte und vereinfachte Darstellung einer erfindungsgemäßen Vorrichtung zum Trocknen von Klärschlamm im Längsschnitt (Figur 1) und im Querschnitt (Figur 2).

Die in der Zeichnung dargestellte erfindungsgemäße Vorrichtung 10 zum Trocknen von Klärschlamm ist in einem Gebäude 12 untergebracht, welches nach Art eines Gewächshauses ausgebildet ist. Das Gebäude 12 überdeckt die Vorrichtung 10 mit einer transparenten Kunststoff- oder Glasabdeckung. Im Gebäude 12 befindet sich am Boden eine Bodenplatte 14 aus Beton, die eine längliche, rechteckige Form aufweist. Die Bodenplatte 14 bildet eine Trockenfläche. In der Bodenplatte 14 ist eine Heizeinrichtung 16 angeordnet, die nach Art einer Fußbodenheizung ausgebildet ist. Über der Bodenplatte 14 ist ein Kratzerförderer 18 angeordnet.

Der Kratzerförderer 18 weist zwei endlose Stahlseile 20 als Zugmittel auf. Die Stahlseile 20 laufen jeweils um zwei Seilscheiben 22 um, die in Endbereichen der Bodenplatte 14 angeordnet sind. Die Seilscheiben 22 sind paarweise drehfest auf Wellen 24 angebracht, die quer zur Bodenplatte 14 verlaufen und die drehbar gelagert sind. Eine der beiden Wellen 24 weist einen nicht sichtbaren Antrieb mit einem Elektromotor und einem angeflanschten Untersetzungs- und Winkelgetriebe auf.

Der Kratzerförderer 18 weist zwei Kratzer 30 auf, die quer zur Bodenplatte 14 an den Stahlseilen 20 befestigt sind. Die Kratzer 30 weisen Laufräder 32 an ihren Enden auf, die auf Laufschienen 34 rollen wenn die Kratzer 30 über die Bodenplatte 14 bewegt werden. Die Laufräder 32 sind an Dreieckträgern 31 oberhalb der Kratzer 30 angebracht. Während eines Umlenkens der Kratzer 30 um die Seilscheiben 22 und während der Rückführung der Kratzer 30 an oberen Trumen 46 der Stahlseile 20 sind die Laufräder 32 nicht geführt, die Dreiecksträger 31 hängen mit den Laufrädern 32 von den Kratzern 30 nach unten. Die Laufschienen 34 sind als L-förmige Stahlprofile ausgeführt, die oberhalb von Längsrändern der Bodenplatte 14 angeordnet sind. Die Laufschienen 34 sind mit Abstand oberhalb der Bodenplatte 14 angeordnet, sie befinden sich auch höher als ein unteres Trum 36 der Stahlseile 20.

Die Vorrichtung 10 weist eine Höheneinstelleinrichtung 38 für die Laufschienen 34 auf: Die Laufschienen 34 sind schwenkbar an einer Anzahl Parallelhebel 40 angebracht, die gleichmäßig oder ungleichmäßig über die Länge der Laufschienen 34 verteilt angeordnet sind. Die Parallelhebel 40 stehen parallel zueinander und sind mir ihren den Laufschienen 34 fernen Enden schwenkbar an massiven Seitenwänden 42 der Bodenplatte 14 befestigt. Es sind Hydraulikzylinder 44 vorgesehen, die sich schwenkbar an den Seitenwänden 42 abstützen und die schwenkbar an den Laufschienen 34 angreifen. Mit den Hydraulikzylindern 44 lassen sich die Laufschienen 34 in ihrer Längsrichtung bewegen. Dadurch werden die Parallelhebel 40 mehr oder weniger steil schräg angestellt, wodurch sich die Höhe der Laufschienen 34 ändert. Durch Änderung der Höhe der Laufschienen 34 wird eine Höhe der Kratzer 30, deren Laufräder 32 auf den Laufschienen 34 rollen, über der Bodenplatte 14 eingestellt.

Der Kratzerförderer 18 weist nur zwei Kratzer 30 auf, es befindet sich jeweils ein Kratzer am unteren Trum 36 und wird über die Bodenplatte 14 bewegt und der andere Kratzer 30 befindet sich am oberen Trum 46 der Stahlseile 20 und wird rückgeführt oder es befinden sich beide Kratzer 30 im Bereich der Seilscheiben 22.

Der Kratzer 30 am unteren Trum 36 der Stahlseile 20 befindet sich mit Abstand oberhalb der Bodenplatte 14, wobei der Abstand durch die Höheneinstellrichtung 38 einstellbar ist. An den Kratzern 30 sind Schlammwender 48 schwenkbar angebracht, die im dargestellten und beschriebenen Ausführungsbeispiel der Erfindung als sog. Gänsefußscharen ausgeführt sind. Sie wirken nach Art von Pflugscharen und wenden auf der Bodenplatte 14 ausgebrachten Klärschlamm wenn sie durch Antrieb des Kratzers 30 durch den Klärschlamm bewegt werden. Durch die schwenkbare Anbringung der Schlammwender 48 findet ein Höhenausgleich statt, die Schlammwender 48 gleiten unabhängig von der Höhe des Kratzers 30 über die Bodenplatte 14. Die Schlammwender 48 von denen in Figur 2 der Einfachheit halber nur drei dargestellt sind, sind in Quer- und Längsrichtung der Bodenplatte 14 so versetzt zueinander angeordnet, dass auf der Bodenplatte 14 ausgebrachter Klärschlamm über die gesamte Breite der Bodenplatte 14 gewendet wird.

An einem der beiden Kratzer 30 ist ein Räumer in Form eines Räumschilds 50 angebracht. Das Räumschild 50 ist schwenkbar am Kratzer 30 angebracht, es lässt sich aus der mit durchgezogenen Linien dargestellten, angehobenen Stellung, in der es außer Funktion ist, in eine in Figur 1 mit Strichlinien dargestellte Räumstellung absenken, in der es über die Bodenplatte 14 streicht. Das Räumschild 50 ist entbehrlich, wenn die Kratzer 30 bis auf die Bodenplatte 14 absenkbar sind. Zur Verschleißminderung können die Kratzer 30 bzw. das Räumschild 50 berührungslos, d.h. mit kleinem Spalt über die Bodenplatte 14 streichen.

Zum Einbringen von Klärschlamm ist ein erster Gurtförderer 52 vorgesehen, mit dem Klärschlamm 56 an einem Ende auf die Trockenfläche 14 gefördert wird. Der Klärschlamm 56 ist üblicherweise durch mechanisches Pressen entwässert wenn er mit dem Gurtförderer 52 auf die Bodenplatte 14 gefördert wird. Dem zu trocknenden, gepressten Klärschlamm wird ein Anteil getrockneter Klärschlamm zugemischt, und zwar kleine Schlammpartikel. Dies hat zwei Gründe: Zum einen wird die Trockenmasse erhöht und dadurch einen Klumpenbildung vermieden, der zu trocknende Klärschlamm wird granuliert. Zum anderen wird Staub im getrockneten Klärschlamm vermieden, der wegen seiner Tendenz aufzuwirbeln und alles zu verschmutzen unerwünscht ist und der eine Staubexplosion bei einer Verbrennung bewirken kann. Die Trennung des getrockneten Klärschlamms in kleine und große Partikel erfolgt mechanisch mittels eines Siebs.

Am anderen Ende der Bodenplatte 14 fällt der getrocknete Klärschlamm 56 auf einen zweiten Gurtförderer 54, der quer zur Bodenplatte 14 angeordnet ist und den getrockneten Klärschlamm 56 abführt.

Die Funktion der erfindungsgemäßen Vorrichtung 10 ist folgende: Durch Pressen entwässerter Klärschlamm 56 wird mit dem ersten Gurtförderer 52 auf das eine Ende der Bodenplatte 14 geworfen. Durch Antrieb des Kratzerförderers 18 werden die Kratzer 30 über die Bodenplatte 14 bewegt und verteilen dabei den Klärschlamm 56 in Längsrichtung über die Bodenplatte 14. Eine Schichtdicke des Klärschlamms 56 entspricht dem Abstand des Kratzers 30 über der Bodenplatte 14, die Schichtdicke des Klärschlamms 56 ist mit der Höheneinstelleinrichtung 38 einstellbar. Beim Bewegen der Kratzer 30 über die Bodenplatte 14 wenden und belüften die Schlammwender 48 den Klärschlamm 56. Sonnenstrahlung, die durch das nach Art eines Gewächshauses ausgebildete Gebäude 12 einfällt, erwärmt und trocknet den Klärschlamm 56. Durch das Wenden und Lüften des Klärschlamms 56 wird die Trocknung beschleunigt und verbessert.

Ist der Klärschlamm 56 ausreichend getrocknet werden entweder die Kratzer 30 durch Absenken der Laufschienen 34 mit der Höheneinstelleinrichtung 38 auf die Bodenplatte 14 abgesenkt oder es wird das Räumschild 50 in die Räumstellung abgesenkt. In beiden Fällen wird der Klärschlamm 56, entweder vom Kratzer 30 oder vom Räumschild 50 über das Ende der Bodenplatte 14 auf den zweiten Gurtförderer 54 geschoben und vom zweiten Gurtförderer 54 abtransportiert.

Durch Erwärmen der Bodenplatte 14 mittels der Heizeinrichtung 16 lässt sich die Trocknung des Klärschlamms 56 beschleunigen. Es ist nicht erforderlich, dass der Kratzerförderer 18 kontinuierlich betrieben wird. Es genügt, wenn der Kratzerförderer 18 von Zeit zu Zeit so lange betrieben wird, dass einer der Kratzer 30 einmal über die Bodenplatte 14 bewegt und damit der Klärschlamm 56 einmal gewendet wird.

Die dargestellte und beschriebene Vorrichtung 10 weist eine Länge zwischen ungefähr 50 m bis 200 m und eine Breite von ungefähr 10 m auf. Es ist eine Schichtdicke des Klärschlamms von ungefähr 8 cm und eine Höhenverstellbarkeit der Kratzer 30 und der Laufschienen 34 von ungefähr 10 cm vorgesehen.

## Patentansprüche

1. Vorrichtung zum Trocknen von Klärschlamm mit einer Trockenfläche, auf die der Klärschlamm zum Trocknen ausbringbar ist, **dadurch gekennzeichnet, dass** die Vorrichtung (10) einen als Stetigförderer arbeitenden Kratzförderer (18) aufweist, dessen Kratzer (30) sich mit Abstand über der Trockenfläche (14) befinden, und dass die Kratzer (30) Laufräder (32) an ihren Enden aufweisen, die auf Laufschienen (34) rollen, wenn die Kratzer (30) über die als Bodenplatte ausgebildete Trockenfläche (14) bewegt werden.

2. Vorrichtung nach Anspruch 1, **dadurch gekennzeichnet, dass** die Vorrichtung (10) eine Höheneinstelleinrichtung (38) aufweist, mit der eine Höhe der Kratzer (30) des Kratzerförderers (18) über der Trockenfläche (14) einstellbar ist.

3. Vorrichtung nach Anspruch 1 oder 2, **dadurch gekennzeichnet, dass** der Kratzerförderer (18) einen Räumer (50) aufweist, der in eine Räumstellung bringbar ist, in der er über die Trockenfläche (14) streift.

4. Vorrichtung nach einem der Ansprüche 1 bis 3, **dadurch gekennzeichnet, dass** die Kratzer (30) Schlammwender (48) aufweisen, die über die Trockenfläche (14) streichen.

5. Vorrichtung nach einem der vorhergehenden Ansprüche, **dadurch gekennzeichnet, dass** der Kratzerförderer ein Seil (20) als Zugmittel aufweist.

6. Vorrichtung nach einem der vorhergehenden Ansprüche, **dadurch gekennzeichnet, dass** der Kratzerförderer (18) höchstens etwa fünf bis sechs Kratzer (30) aufweist.

7. Vorrichtung nach einem der vorhergehenden Ansprüche, **dadurch gekennzeichnet, dass** der Kratzerförderer (18) ein oder zwei Kratzer (30) aufweist.

8. Vorrichtung nach einem der vorhergehenden Ansprüche, **dadurch gekennzeichnet, dass** die Vorrichtung (10) in einem Gebäude (12) untergebracht ist.

9. Vorrichtung nach einem der vorhergehenden Ansprüche, **dadurch gekennzeichnet, dass** die Trockenfläche (14) eine Heizeinrichtung (16) aufweist.

## Claims

1. A device for drying sewage sludge, having a drying surface onto which the sludge can be applied for drying, **characterised in that** the device (10) has a chain conveyor (18) which operates as a continuous conveyor and the ploughs (30) of which are at a distance above the drying surface (14), and that the ploughs (30) have castors (32) at the ends thereof, which roll on running rails (34) when the ploughs (30) are moved over the drying surface (14), which is formed as a base plate.

2. The device according to Claim 1, **characterised in that** the device (10) has a height adjustment means (38), with which a height of the ploughs (30) of the chain conveyor (18) above the drying surface (14) can be set.

3. The device according to Claim 1 or 2, **characterised in that** the chain conveyor (18) has a scraper (50), which can be brought into a scraping position in which it brushes over the drying surface (14).

4. The device according to one of Claims 1 to 3, **characterised in that** the ploughs (30) have sludge turners (48) which brush over the drying surface (14).

5. The device according to one of the preceding claims, **characterised in that** the chain conveyor has a cable (20) as the traction means.

6. The device according to one of the preceding claims, **characterised in that** the chain conveyor (18) has a maximum of five to six ploughs (30).

7. The device according to one of the preceding claims, **characterised in that** the chain conveyor (18) has one or two ploughs (30).

8. The device according to one of the preceding claims, **characterised in that** the device (10) is accommodated in a building (12).

9. The device according to one of the preceding claims, **characterised in that** the drying surface (14) has a heating means (16).

## Revendications

1. Dispositif pour le séchage de boues d'épuration, avec une surface de séchage, sur laquelle la boue d'épuration peut être étalée en vue du séchage, **caractérisé en ce que** le dispositif (10) comporte un convoyeur à raclette (18) travaillant comme un convoyeur continu, dont les raclettes (30) se trouvent à distance au-dessus de la surface de séchage (14), et **en ce qu'**à leurs extrémités, les raclettes (30) comportent des galets (32) roulant sur des rails de guidage (34) lorsque les raclettes (30) sont déplacées au-dessus de la surface de séchage (14) conçue comme une plaque de fond.

2. Dispositif selon la revendication 1, **caractérisé en ce que** le dispositif (10) comporte un moyen de réglage de la hauteur (38) permettant de régler une hauteur des raclettes (30) du convoyeur à raclettes (18) au-dessus de la surface de séchage (14).

3. Dispositif selon la revendication 1 ou 2, **caractérisé en ce que** le convoyeur à raclettes (18) comporte un racleur (50) susceptible d'être mis dans une position de raclage, dans laquelle il passe au-dessus de la surface de séchage (14).

4. Dispositif selon l'une des revendications 1 à 3, **caractérisé en ce que** les raclettes (30) comportent des retourneurs de boue (48) passant au-dessus de la surface de séchage (14).

5. Dispositif selon l'une des revendications précédentes, **caractérisé en ce que** le convoyeur à raclettes comporte un câble (20) comme moyen de traction.

6. Dispositif selon l'une des revendications précédentes, **caractérisé en ce que** le convoyeur à raclettes (18) comporte tout au plus environ cinq à six raclettes (30).

7. Dispositif selon l'une des revendications précédentes, **caractérisé en ce que** le convoyeur à raclettes (18) comporte un ou deux raclettes (30).

8. Dispositif selon l'une des revendications précédentes, **caractérisé en ce que** le dispositif (10) est installé dans un bâtiment (12).

9. Dispositif selon l'une des revendications précédentes, **caractérisé en ce que** la surface de séchage (14) comporte un moyen de séchage (16).
